# FASCICULE DE BREVET EUROPEEN

(11) **EP 1 337 780 B1**
(45) Date de publication et mention de la délivrance du brevet: **15.09.2004**
(21) Numéro de dépôt: 01998765.0
(22) Date de dépôt: 13.11.2001
(51) Int. Cl.: F16L 33/28, F16L 33/01

(54) **TUYAU FLEXIBLE A BRIDE DE RACCORDEMENT ET PROCEDE D'OBTENTION D'UN TEL TUYAU**
FLEXIBLER SCHLAUCH MIT ANSCHLUSSFLANSCH UND VERFAHREN ZU SEINER HERSTELLUNG
FLEXIBLE HOSE WITH CONNECT FLANGE AND METHOD FOR OBTAINING SAME

(30) Priorité: 01.12.2000 FR 0015557
(43) Date de publication de la demande: 27.08.2003
(73) Titulaire: Trelleborg Industrie, 63100 Clermont-Ferrand (FR)
(72) Inventeur: MAYAU, David, F-63450 Tallende (FR); LAURAND, Guy, F-63430 Pont du Chateau (FR)
(74) Mandataire: Abello, Michel
(86) Numéro de dépôt international: PCT/FR2001/003538
(87) Numéro de publication internationale: WO 2002/044607

(56) Documents cités:
- FR-A- 1 480 225
- GB-A- 1 527 767
- GB-A- 2 018 936

## Description

La présente invention concerne un tuyau flexible à bride de raccordement et un procédé d'obtention d'un tel tuyau.

L'invention concerne plus particulièrement un tuyau flexible utilisé pour établir des lignes de transport souples servant à charger/décharger la cargaison des navires pétroliers à partir d'une installation fixe ou relativement mobile, ou à relier deux installations pétrolières dont l'une au moins est mobile, les installations mobiles étant par exemple des installations soumises à la houle et/ou à la marée.

Pour faciliter leur fabrication, leur transport et leur installation, de tels tuyaux, dont le diamètre interne peut dépasser 600 mm, sont fabriqués en longueur de 6 à 15 mètres et sont munis à leurs extrémités de brides de raccordement pour permettre de les assembler les uns aux autres et/ou à une installation pétrolière.

De tels tuyaux sont soumis à diverses contraintes élevées résultant notamment de la pression interne du fluide transporté et des mouvements et des déformations de la ligne. Ces tuyaux doivent présenter un ensemble de propriétés telles qu'une résistance à la pression interne de refoulement du fluide, une résistance à la traction longitudinale, une résistance à l'écrasement, une résistance à la fatigue par flexion et aux efforts de torsions, une bonne flexibilité en même temps qu'une résistance à l'ovalisation pour éviter la cassure du tuyau lors du cintrage.

Pour obtenir de telles propriétés, il est connu, notamment par les demandes de brevet 1 480 225 et 2 418 900, d'employer des nappes de renforcement ou carcasse, en câblés métalliques ou textiles souples et résistants répartis en paires de nappes séparées l'une de l'autre par une couche de caoutchouc, ainsi que des brides de raccordement, dites intégrées, constituées d'au moins deux éléments annulaires s'emboîtant partiellement l'un dans l'autre et enserrant entre eux les extrémités radialement redressées des nappes métalliques d'au moins une carcasse. Les brides sont positionnées aux extrémités du tube avant la vulcanisation de la paroi élastomère du tuyau, la vulcanisation assurant la solidarisation de l'ensemble. Le tuyau comprend une carcasse principale destinée à supporter la pression interne du fluide, dans laquelle les nappes de chaque paire sont constituées de câblés métalliques parallèles orientés obliquement en sens inverse dans l'une et l'autre nappes suivant des angles voisins de l'angle d'équilibre. Une carcasse secondaire constituée de paires de nappes de câblés métalliques ou textiles suivant des angles supérieurs ou inférieurs à 55° confère les propriétés de flexion requises. Pour compléter et/ou remplacer la carcasse secondaire, il est connu d'utiliser des anneaux métalliques de renfort ou une armature en hélice.

Selon un premier type de bride enseignée dans les deux demandes de brevet précitées, la bride possède un diamètre supérieur à la paroi du tuyau. La partie annulaire saillante de la bride comprend des perçages longitudinaux traversant permettant le raccordement des tuyaux au moyen de boulons et d'écrous. Il s'est avéré qu'un tuyau muni d'une telle bride ne présente pas une résistance suffisante pour certaines applications, notamment pour le raccordement du tuyau à un point fixe. En effet, dans ce cas, la bride est soumise à des efforts importants de traction et de flexion et des ruptures du tuyau ont été constatées à la jonction du tuyau avec la base de la partie annulaire saillante de la bride. Par ailleurs, pour l'installation d'une ligne, il est souhaitable de pouvoir enrouler sur un touret les tuyaux raccordés les uns aux autres. Pour permettre la mise sur touret et éviter tout contact des brides avec le touret, il est nécessaire de prévoir des bossages en caoutchouc au niveau des brides.

Pour remplacer ce premier type de bride, il a été proposé un tuyau présentant une forme extérieure conique ou cylindro-conique à ses extrémités, pour conférer une variation de rigidité régulière, et pourvu d'un deuxième type de bride, de diamètre extérieur inférieur au diamètre du tuyau, une telle bride étant enseignée dans la demande de brevet 2 418 900. Grâce à cette configuration de bride, des nappes de renforcement peuvent être coudées radialement vers l'intérieur pour les nappes extérieures et vers l'extérieur pour les nappes intérieures au niveau de la bride, ladite bride servant à fixer lesdites nappes coudées. Ainsi, la résistance du tuyau au niveau du raccordement est renforcée. Toutefois, une telle bride présente des perçages borgnes longitudinaux à partir de sa face frontale de raccordement qui nécessitent l'utilisation d'une pièce intermédiaire pour le raccordement des brides de deux tuyaux successifs.

Le but de la présente invention est de proposer un tuyau à bride de raccordement qui soit résistant, dont le raccordement à un autre tuyau s'effectue sans pièce intermédiaire et permettant la mise sur touret de tuyaux raccordés les uns aux autres.

Ce but est atteint par le fait que le tuyau flexible selon l'invention, dont la paroi en élastomère est renforcée par au moins une carcasse principale comportant des câbles souples, comprenant au moins à l'une de ses extrémités une bride de raccordement annulaire, munie de perçages longitudinaux à partir de sa surface d'extrémité transversalement externe, à laquelle bride est fixée au moins la carcasse principale, ladite bride ayant un diamètre extérieur inférieur ou égal au diamètre extérieur de la paroi du tuyau au voisinage de la bride, se caractérise par le fait que la bride comprend des perçages, dits débouchant, qui débouchent sur un ou des renfoncement(s) ménagé(s) sur la surface extérieure de la paroi du tuyau et dont les dimensions permettent d'y loger au moins un moyen de liaison accessible de l'extérieur pour le raccordement de tuyaux bout à bout sans pièce intermédiaire intercalée entre leurs brides respectives.

Selon une particularité, chaque perçage débouchant débouche sur un renfoncement distinct.

Selon un mode de réalisation, la bride comprend des perçages dits non débouchant qui ne débouchent pas sur un renfoncement et qui sont taraudés sur au moins une partie pour le vissage d'une tige filetée complémentaire du moyen de liaison précité, les perçages débouchant étant non taraudés.

Dans un mode de réalisation particulier, les perçages débouchant et les perçages non débouchant sont alternativement et périphériquement répartis sur la surface d'extrémité de la bride.

Avantageusement, les perçages non débouchant comportent un fond séparant lesdits perçages de la paroi du tuyau et constituent des perçages borgnes de la bride.

Avantageusement, au moins une partie des parois des renfoncements est recouverte d'une bande d'étanchéité permettant d'éviter le contact d'une carcasse avec l'extérieur.

Selon un mode de réalisation, la carcasse principale de renfort est formée d'une ou plusieurs paires de nappes concentriques espacées radialement par des couches d'élastomère, chaque paire étant constituée de deux nappes d'élastomère et de câbles métalliques parallèles orientés obliquement en sens inverse dans l'une et l'autre nappe de façon à former des angles de 20° à 70° par rapport à l'axe du tuyau.

Selon une particularité, le tuyau comprend une carcasse secondaire de renfort de diamètre supérieur à la carcasse principale et espacée radialement vers l'extérieur de celle-ci par une couche d'élastomère, ladite carcasse secondaire comprenant des nappes concentriques d'élastomère et de câbles métalliques et/ou textiles, assemblées directement les unes aux autres et/ou espacées par des couches d'élastomère, les câbles de la carcasse principale formant des angles sensiblement égaux à l'angle d'équilibre, tandis que les câbles de la carcasse secondaire forment des angles compris entre 20 et 70°.

Avantageusement, la bride comprend au moins deux éléments annulaires axialement solidaires, un élément longitudinalement externe et un élément longitudinalement interne, muni chacun de trous coaxiaux formant au moins une partie des perçages précités, au moins l'élément interne possédant un diamètre interne inférieur ou égal à la carcasse principale et au moins la carcasse principale étant coudée radialement, la partie radiale ainsi coudée étant intercalée et fixée entre les deux éléments de la bride.

Selon une particularité, le tuyau présente à proximité de la bride une forme extérieure conique, avec augmentation de l'épaisseur en direction de la bride, obtenue par augmentation de l'épaisseur d'une couche élastomère et/ou insertion d'une couche élastomère et/ou de nappes entre des nappes d'une carcasse.

Avantageusement, la partie coudée radiale de la carcasse principale se prolonge radialement au-delà d'au moins l'élément longitudinalement interne de la bride et est coudée longitudinalement à distance de l'extrémité du tuyau, au moins une partie des nappes la constituant s'intercalant entre des nappes de la carcasse secondaire pour fixer ces dernières à la bride via les nappes de la carcasse principale.

Selon une particularité, le tuyau comprend à proximité de la bride des nappes de renfort longitudinal, comprenant des câbles disposés de manière sensiblement parallèle à l'axe du tuyau, lesdites nappes étant assemblées à la bride et à la carcasse principale et/ou à la carcasse secondaire.

Avantageusement, les nappes de renfort ont des diamètres supérieurs à celui des nappes de la carcasse principale et inférieurs à celui des nappes de la carcasse secondaire et sont solidaires les unes des autres et assemblées à la carcasse principale, au moins l'une des nappes ayant son extrémité doublement coudée reliée à au moins une nappe de la carcasse secondaire.

Avantageusement, la bride comprend des éléments tubulaires insérés au moins partiellement dans les trous coaxiaux des éléments longitudinalement interne et externe et dont les surfaces externes sont recouvertes au moins partiellement d'élastomère, pour assurer l'étanchéité de la bride au niveau desdits perçages et garantir un assemblage résistant des différents éléments de la bride.

Selon une autre particularité, le tuyau comprend des anneaux métalliques ou une armature métallique en hélice noyée dans la couche d'élastomère comprise entre la carcasse principale et la carcasse secondaire.

Un autre but de l'invention est de proposer un procédé d'obtention d'un tel tuyau.

Ce but est atteint par le fait que le procédé d'obtention d'un tuyau flexible selon l'invention comprend une étape de fixation de noyaux contre la surface transversalement interne de la bride au niveau d'au moins certains des perçages longitudinaux, une étape de positionnement et d'ajustement de la bride à l'extrémité du tuyau, lesdits noyaux étant saillants par rapport à la surface extérieure de la paroi en élastomère cru non vulcanisé du tuyau ou présentant une surface affleurant sensiblement celle-ci, et une étape d'enlèvement de ces noyaux après vulcanisation de l'élastomère.

Selon une particularité, le procédé selon l'invention comprend une étape de mise en place de la bande d'étanchéité sur les noyaux, lesdites bandes restant collées à la paroi d'élastomère vulcanisé des renfoncements après l'enlèvement des noyaux.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence au dessin schématique annexé.

Sur ce dessin :
- la figure 1 représente une demi-vue partielle et en coupe axiale d'une extrémité d'un tuyau selon l'invention au niveau d'un perçage non débouchant ;
- la figure 2 représente une demi-vue partielle et en coupe axiale d'une extrémité d'un tuyau selon l'invention au niveau d'un perçage débouchant ;
- la figure 3A représente une vue éclatée en coupe longitudinale des différents éléments constituant une bride du tuyau selon l'invention, au niveau d'un perçage non débouchant ;
- la figure 3B représente une vue en perspective d'un élément tubulaire d'une bride du tuyau selon l'invention ;
- la figure 4A représente une vue en perspective de deux tuyaux selon l'invention assemblés par leurs brides de raccordement ;
- la figure 4B représente une vue agrandie d'une partie de la figure 4A ;
- la figure 5 représente une demi-vue partielle et en coupe axiale selon le plan V-V de la figure 4A, de deux tuyaux raccordés ;
- les figures 6A et 6B représentent respectivement une vue en perspective et une vue arrière de l'élément interne d'une bride de raccordement selon l'invention illustrant le positionnement de noyaux de moulage pour le procédé d'obtention d'un tuyau selon l'invention ;
- les figures 7A et 7B représentent une vue respectivement en perspective et en coupe d'un noyau de moulage utilisé dans le procédé d'obtention d'un tuyau selon l'invention ;
- la figure 8 représente une vue en perspective d'une bande d'étanchéité destinée à être placée contre la paroi d'un renfoncement de la surface extérieure du tuyau.

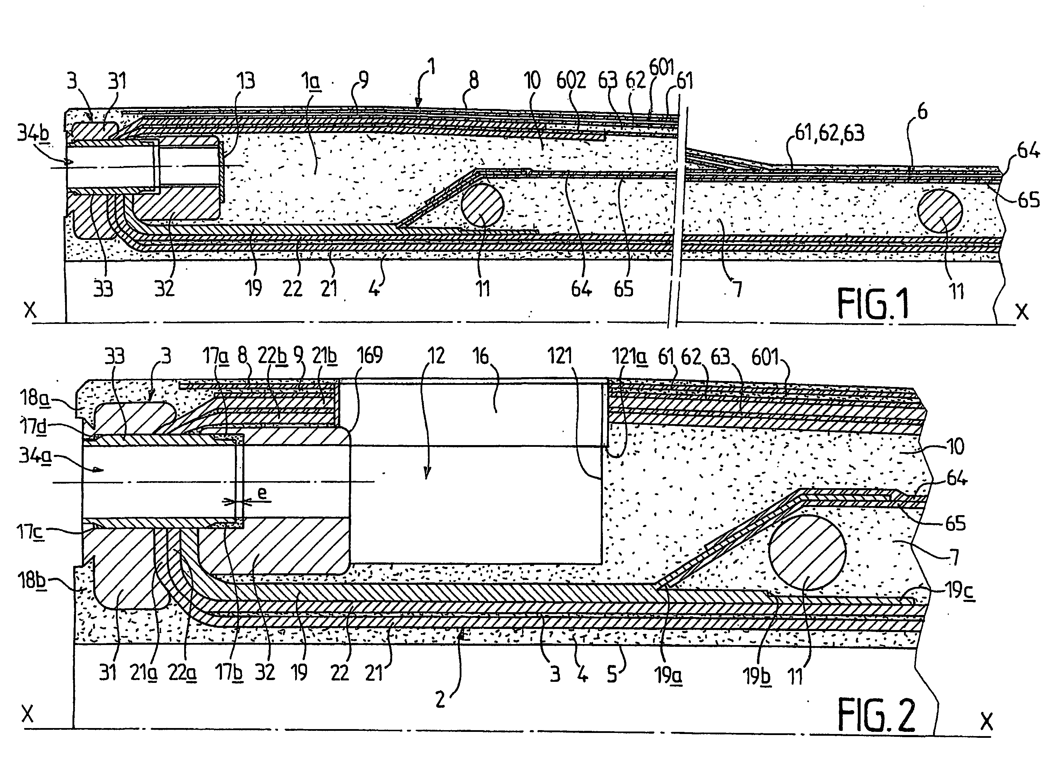

En référence aux figures 1 et 2, le tuyau 1 comprend une paroi 1a sensiblement cylindrique selon un axe principal X, en élastomère, tel que du caoutchouc vulcanisé ou un matériau souple similaire, qui est renforcée par une carcasse principale 2 formée d'au moins deux paires 21, 22 de nappes coaxiales. Dans la suite de la description, le terme caoutchouc désigne tout type d'élastomère approprié pour constituer les différentes couches de la paroi 1a, la nature du caoutchouc pouvant de manière connue être différente d'une couche à l'autre. Les nappes de chaque paire 21, 22 sont appliquées sensiblement l'une contre l'autre et sont constituées par des câbles métalliques parallèles noyés dans un film de caoutchouc, les câbles étant orientés obliquement en sens inverse dans l'une et l'autre nappes d'une paire. Les paires 21, 22 sont espacées radialement l'une de l'autre par une couche de caoutchouc 3. La paire 21 de nappes de plus faible diamètre est recouverte intérieurement par une couche intérieure de caoutchouc 4 formant la surface interne 5 du tuyau.

La paroi 1a du tuyau est renforcée par une carcasse secondaire 6 qui est espacée radialement par rapport à la carcasse principale d'une couche de caoutchouc 7, ladite carcasse secondaire comprenant des nappes 61-65 concentriques constituées de câbles métalliques ou textiles noyés dans un film de caoutchouc. Les nappes sont appliquées directement les unes aux autres et/ou sont espacées radialement par des couches de caoutchouc. La nappe 61 de plus grand diamètre est recouverte extérieurement d'une couche externe 8 de caoutchouc formant la surface externe 9 du tuyau. Dans l'exemple de réalisation illustré, la carcasse secondaire 6 comprend un premier ensemble de deux nappes 64, 65 appliquées directement l'une sur l'autre et comprenant par exemple des câbles métalliques. Ce premier ensemble est espacé radialement vers l'intérieur par une couche de caoutchouc 10 d'un second ensemble de trois nappes 61-63 de diamètres plus importants, constituées par exemple chacune de câbles textiles noyés dans un film de caoutchouc. Ces trois dernières nappes 61-63 appliquées directement l'une contre l'autre, sont espacées les unes des autres par des couches de caoutchouc 601, 602 à proximité de la bride, tél qu'il est décrit ci-après.

Les câbles croisés des nappes de la carcasse principale 2 et secondaire 6 peuvent former un angle compris entre 20 et 70° par rapport à l'axe X du tuyau. Les câbles croisés des paires 21, 22 de la carcasse principale forment de préférence un angle proche de l'angle d'équilibre, soit 55°. La carcasse principale 2 est ainsi principalement destinée à supporter la pression interne du fluide véhiculé. Les efforts de tractions sont supportés à la fois par la carcasse principale 2 et la carcasse secondaire 6. Les angles des câbles des nappes 61-65 de la carcasse secondaire sont adaptés en fonction des propriétés recherchées. Pour augmenter la résistance du tuyau aux efforts de traction, l'angle de ces câbles est réduit par rapport à l'angle d'équilibre. L'angle de ces câbles peut également être augmenté pour accroître l'aptitude au cintrage du tuyau. Le tuyau peut comprendre par ailleurs des anneaux rigides 11 ou une armature en hélice de pas constant ou non, disposés dans la couche d'élastomère 7 comprise entre la carcasse principale 2 et la carcasse secondaire 6. Ces anneaux 11 servent d'appui aux carcasses lorsqu'elles sont sollicitées en traction et permettent également d'augmenter la résistance à l'écrasement du tuyau.

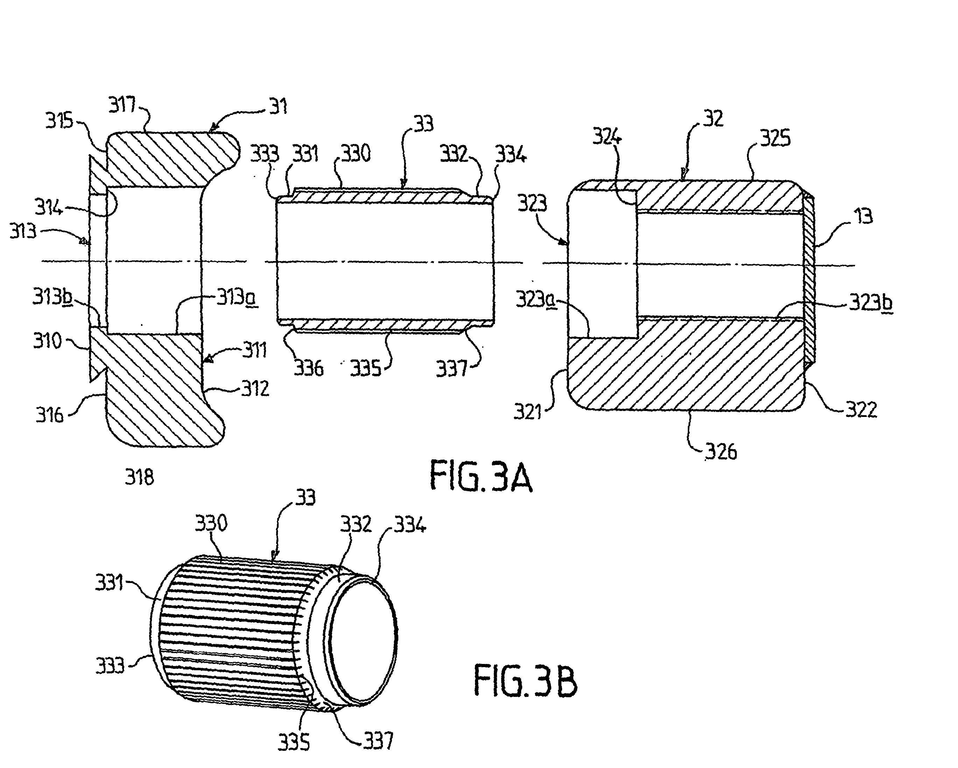

Le tuyau comprend à au moins une de ses extrémités une bride 3 de raccordement, à laquelle au moins la carcasse principale 2 est fixée. En référence à la figure 3A, la bride comprend deux éléments annulaires partiellement emboîtables, un élément longitudinalement externe 31, comprenant une surface externe 310, constituant la surface d'extrémité transversalement externe de la bride, et une surface interne de serrage 311 et un élément longitudinalement interne 32, comprenant une surface de serrage 321, une surface interne 320 constituant la surface transversalement interne de la bride. Lesdits éléments, appelés ci-après élément externe 31 et élément interne 32, comprennent des trous longitudinaux traversant 313, 323 répartis concentriquement. Lorsque les deux éléments sont partiellement emboîtés, avec leurs surfaces de serrage 311, 321 en vis-à-vis, les trous des éléments sont disposés coaxialement pour former des perçages 34a, 34b de raccordement de la bride. L'élément externe 31 présente un diamètre externe et un diamètre interne inférieur respectivement aux diamètres externe et interne de la paroi 1a du tuyau. L'élément interne 32 présente des diamètres interne et externe inférieurs à ceux de l'élément externe 31 et l'élément externe comprend sur sa surface interne de serrage 311 une gorge 312 annulaire dans laquelle l'élément interne s'emboîte. Suivant un mode de réalisation particulier, des tubulures 33 sont emmanchées partiellement dans les trous 313, 323 des éléments, afin de faciliter le montage de la bride, d'assurer une fixation résistante entre les deux éléments et d'éviter l'infiltration d'eau par lesdits trous. Les deux paires 21, 22 de la carcasse principale sont coudées radialement vers l'extérieur, les parties coudées 21a, 22a ainsi formées sont appliquées l'une contre l'autre, sans couche de caoutchouc intermédiaire, et sont intercalées et fixées entre les éléments annulaires 31, 32 de la bride, en contournant les tubulures 33.

A titre d'exemple, les trous 313 de l'élément externe 31 présentent une première partie 313a se prolongeant par une deuxième partie 313b de diamètre plus petit, débouchant sur la surface extérieure 310 de l'élément, en formant un épaulement 314 orienté dans la même direction que la surface interne de l'élément. Les trous 323 de l'élément interne 32 présentent une première partie 323a débouchant sur la surface de serrage 321, de diamètre égal à la première partie 313a de l'élément externe, et se prolonge par une deuxième partie 323b en formant un épaulement 324 orienté dans la même direction que la surface de serrage. Les tubulures 33 présentent un diamètre interne sensiblement égal à celui de la deuxième partie 323b des trous de l'élément interne et un diamètre extérieur sensiblement égal à celui des premières parties 313a, 323a. La surface extérieure des tubulures comporte aux extrémités des renfoncements circulaires 331, 332 s'étendant jusqu'aux bords circulaires 333, 334 des tubulures et formant des épaulements obliques 336, 337. Le diamètre externe des tubulures au niveau d'au moins l'un des renfoncements est inférieur ou égal au diamètre de la deuxième partie 313b de l'élément externe. Pour procéder au montage de la bride, les tubulures sont recouvertes de caoutchouc brut puis insérées en force dans les éléments externe et interne, jusqu'à ce que les bords circulaires 333 des tubulures soit sensiblement dans le même plan que la surface externe 310 de l'élément externe, les parties coudées 21a, 22a étant enserrées entre les deux éléments. Lors de cet assemblage, le caoutchouc se répartit pour remplir les espaces au niveau des épaulements en vis-à-vis des éléments et des tubulures et former des joints d'étanchéité 17a-17d après vulcanisation. Un jeu e (figure 2) est maintenu entre le bord circulaire 334 des tubulures et les épaulements 324 des éléments internes pour permettre d'ajuster le serrage des deux éléments. Pour faciliter la répartition du caoutchouc brut et assurer un assemblage résistant des deux éléments, les tubulures présentent des rainures périphériques 335 longitudinales, tel qu'il apparaît sur la figure 3B.

Avantageusement, la surface extérieure 9 du tuyau présente une forme conique au niveau de la bride (sur une longueur comprise entre 0,5 et 4 mètres, avec une épaisseur croissante en direction de la bride. La conicité est obtenue par augmentation progressive de la couche de caoutchouc 10 entre les deux ensembles de nappes de la carcasse secondaire et par la présence de couche de caoutchouc 601, 602 entre les nappes 61-63 du second ensemble. Le diamètre des nappes 61-63 du second ensemble augmente progressivement en s'approchant de la bride 3 pour arriver à un diamètre supérieur à celui de l'élément interne 32 de la bride, lesdites nappes s'arrêtant avant l'élément externe 31 de la bride. Le premier ensemble de nappes 64, 65 s'étend quant à lui dans la partie conique de la paroi avec un diamètre sensiblement constant.

Avantageusement, la carcasse secondaire 6 est également fixée à la bride par au moins une partie de ses nappes. Les parties coudées 21a, 22a de la carcasse principale, intercalées entre les éléments annulaires de la bride sont coudées longitudinalement vers l'arrière, les parties coudées longitudinales 21b, 22b ainsi formées sont intercalées entre des nappes du second ensemble de la carcasse secondaire et/ou fixées contre celles-ci, sur une longueur comprise par exemple entre 300 et 400 mm. A titre d'exemple, la partie coudée longitudinale 22b de la paire de plus faible diamètre est appliquée contre la surface interne de la nappe 63 de plus faible diamètre du deuxième ensemble et la partie coudée longitudinale 21b de l'autre paire vient s'intercaler entre la nappe 62 précitée et la nappe 63 suivante.

Le tuyau comporte en outre des renforts longitudinaux 19 au niveau de la bride. Ces renforts longitudinaux sont par exemple formés par trois nappes de renfort longitudinal concentriques, une nappe supérieure 19a, une nappe intermédiaire 19b et une nappe inférieure 19c, de diamètre supérieur à la carcasse principale et inférieur à la carcasse secondaire. Chaque nappe est formée de câbles textiles par exemple, disposés de manière sensiblement axiale et noyés dans un film de caoutchouc. Ces trois nappes sont disposées les unes contre les autres et solidarisées par la nappe inférieure 19c à la carcasse principale et coudées avec celle-ci pour être intercalées entre les deux éléments 31, 32 de la bride. De préférence, les nappes de renfort 19a-19c s'étendent jusqu'aux perçages des brides et s'arrêtent sensiblement au niveau de la surface circulaire externe 325 de l'élément interne. La nappe supérieure 19a s'étend radialement vers l'extérieur de manière oblique et vient s'intercaler entre les deux nappes 64, 65 de la carcasse secondaire qui s'étendent obliquement vers l'intérieur. Ainsi, dans le présent mode de réalisation, les nappes du premier ensemble de la carcasse secondaire sont fixées indirectement à la bride, par l'intermédiaire des renforts longitudinaux et de la carcasse principale. Dans des variantes de réalisation, des nappes de renfort longitudinal sont assemblées d'une part à la bride et d'autre part entre et/ou contre des nappes de la carcasse principale et/ou secondaire, des nappes pouvant alors avoir des diamètres supérieurs à ceux des nappes de la carcasse secondaire ou inférieurs à ceux des nappes de la carcasse principale.

Suivant l'invention, la surface externe 9 du tuyau comporte des renfoncements 12 ou ouvertures sur lesquels débouchent des perçages 34a ou la totalité des perçages de la bride. Dans l'exemple décrit, les renfoncements 12 sont disposés de telle sorte qu'un perçage sur deux est débouchant. La figure 1 représente une coupe longitudinale d'un tuyau selon l'invention au niveau d'un perçage non débouchant 34b et la figure 2 représente une coupe longitudinale d'un même tuyau au niveau d'un perçage débouchant 34a. Dans le cas d'un tuyau de diamètre interne de 600 mm comprenant une bride munie de 20 perçages (selon la norme ANSI B. 16.5 - Class 150), le tuyau selon l'invention présentera 10 perçages débouchant et 10 perçages non débouchant alternativement répartis.

Les perçages non débouchant 34b présentent une partie taraudée, tandis que les perçages débouchant sont lisses sur toute leur longueur. Avantageusement, la partie taraudée des perçages non débouchant est constituée par la deuxième partie 323b des perçages de l'élément interne de la bride, tel que représenté sur la figure 3A. Les perçages non débouchant 34b sont obturés par des plaques métalliques 13 soudées sur la surface interne 322 de l'élément interne, afin d'éviter toute infiltration d'eau dans le tuyau. Bien entendu, un élément interne préformé, présentant des trous débouchant et des trous borgnes, peut être envisagé.

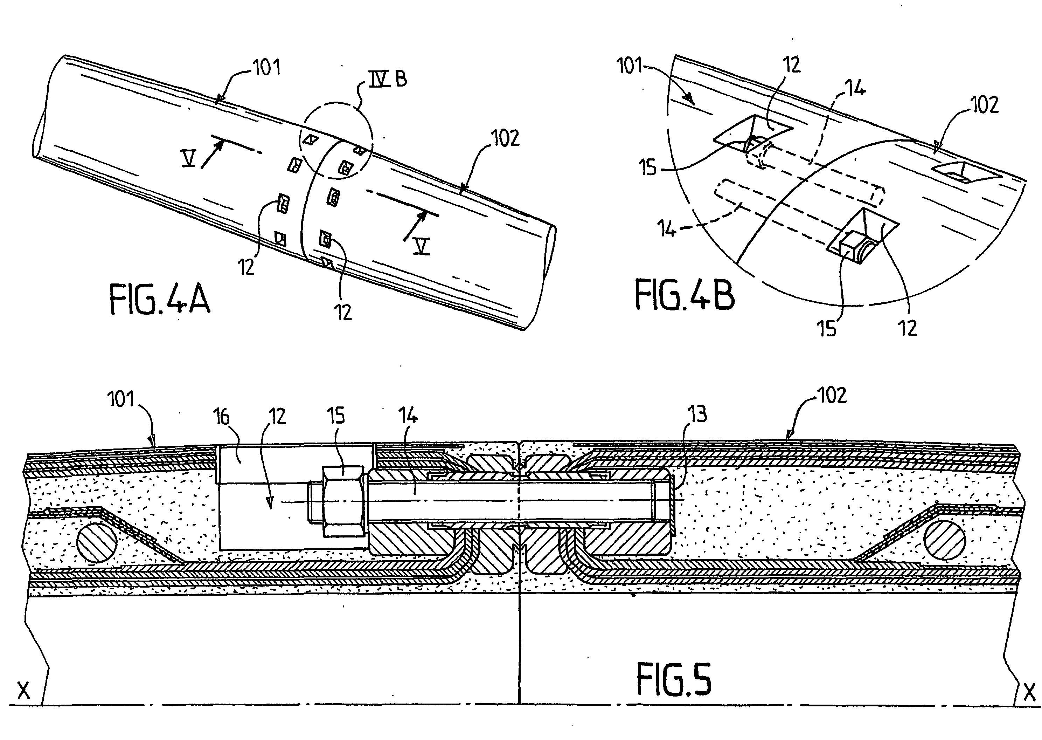

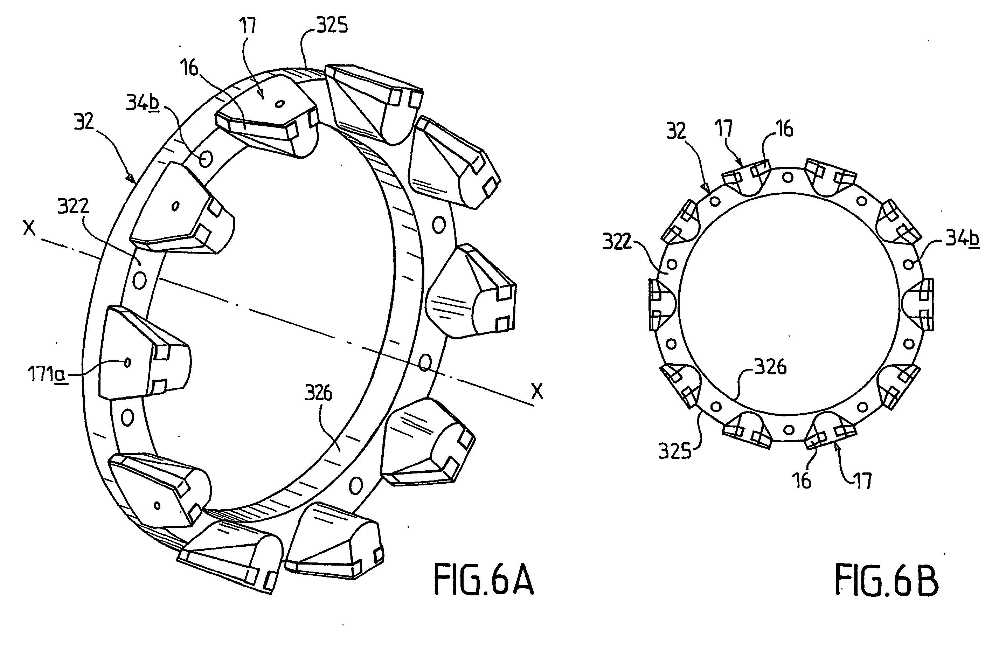

Cette bride de raccordement permet l'assemblage de tuyaux bout à bout ou l'assemblage du tuyau à une installation fixe ou mobile sans nécessiter de pièce intermédiaire. Les figures 4A, 4B et 5 illustrent le raccordement de deux tuyaux selon l'invention. Le raccordement de deux tuyaux 101, 102 s'effectue en disposant les perçages non débouchant 34b des tuyaux en vis-à-vis des perçages débouchant 34a de la façon suivante. Des tiges filetées 14 sont vissées dans les perçages non débouchant 34b des brides de chaque tuyau et les deux tuyaux sont ensuite positionnés de manière à permettre l'insertion des portions saillantes de tiges filetées d'un tuyau dans les perçages débouchant de l'autre tuyau. Des écrous 15 sont ensuite vissés sur les extrémités des tiges filetées positionnées dans les renfoncements 12. Suivant la taille des renfoncements, les écrous peuvent être positionnés dans les renfoncements avant l'insertion complète des tiges filetées dans lesdits renfoncements. Les écrous sont ensuite vissés manuellement ou mécaniquement. De préférence, les renfoncements ne s'étendent pas au-delà de la surface circulaire interne de l'élément interne de la bride et représentent un volume qui correspond sensiblement au volume juste nécessaire pour permettre le serrage des écrous sur les tiges filetées.

Avantageusement, les couches externe 9 et interne 4 du tuyau se prolongent au-delà des carcasses de renforcement 2, 6 et viennent se loger dans des évidements 315, 316 ménagés dans la surface extérieure 310 de l'élément externe de la bride, pour former un joint intégré de raccordement du tuyau. L'élément externe comporte sur sa surface extérieure 310 un premier évidement circulaire 315 s'étendant jusqu'à la paroi circulaire externe 317, dans lequel la couche externe 8 du tuyau vient se loger. De manière similaire, la surface extérieure 310 comporte un second évidement 316 s'étendant jusqu'à la paroi circulaire interne 318 de l'élément, dans lequel vient se loger la couche interne 4 de la paroi. Les couches interne et externe logées dans les évidements forment une surépaisseur axiale, visible sur la figure 2, servant de joint d'étanchéité 18a, 18b, pour le raccordement des deux tuyaux.

Avantageusement, la partie supérieure des parois verticales 121 en caoutchouc des renfoncements 12 est recouverte d'une bande métallique 16 sur une hauteur correspondant aux différentes nappes présentes à ce niveau de la paroi du tuyau, à savoir les nappes 61-63 du deuxième ensemble de la carcasse secondaire et les parties 21b, 22b coudées longitudinalement des paires de la carcasse principale. Ces nappes, qui affleurent les parois verticales 121 des renfoncements sont ainsi protégées de l'extérieur. La bande 16, qui a été fixée à la paroi du renfoncement lors de la vulcanisation, repose sur un épaulement 121a présent sur les parois en caoutchouc du renfoncement ainsi que sur l'élément interne de la bride. Le bord supérieur de la bande d'étanchéité peut venir affleurer la surface externe 9 de la paroi du tuyau, ou être espacé de celle-ci d'une hauteur sensiblement égale ou inférieure à l'épaisseur de la couche externe 8.

Les tuyaux selon l'invention, munis à chacune de leurs extrémités d'une bride associée à des renfoncements, tel que décrit précédemment, peuvent être raccordés bout à bout pour constituer une ligne de transport entre un navire pétrolier et un point fixe ou mobile, ou entre deux installations pétrolières. Pour la mise en place de telles lignes, les tuyaux bout à bout peuvent avantageusement être enroulés autour d'un touret. Bien entendu, les extrémités de la ligne doivent être reliées à une bride complémentaire sur le pétrolier ou le point fixe ou mobile. La ligne obtenue présente de bonnes propriétés de résistance, y compris au niveau de son raccordement à un point fixe. Le tuyau selon l'invention peut être utilisé pour réaliser des lignes de grande longueur. A titre d'exemple, dans le cas des récentes exploitations de gisements pétroliers marins profonds, appelées gisements "offshore" profonds, à des profondeurs pouvant atteindre 1000 mètres ou plus, les différents puits d'exploitation sont reliés par des tuyaux flexibles à une plate-forme pétrolière unique sur laquelle un pré-traitement du pétrole brut est effectué. La plate-forme est ensuite reliée par une ligne de transport à un pétrolier intermédiaire de stockage qui doit être positionné en dehors de la zone des puits d'exploitation et à une distance de sécurité de la plate-forme qui a été fixée à environ 1,6 km. Une ligne de transport d'une telle longueur subit, en particulier au niveau de ses extrémités, des contraintes supérieures à celles rencontrées dans les lignes classiques, mentionnées précédemment, d'une longueur maximale de 300 mètres à une profondeur d'environ 100 mètres. La solution actuelle consiste à réaliser une ligne avec des tuyaux rigides en inox, à une profondeur de l'ordre de 600 mètres. Pour remplacer une telle ligne rigide de diamètre limité et dont l'installation est complexe et onéreuse, le tuyau selon l'invention, peut être utilisé pour réaliser une ligne résistante, mise en place aisément à partir d'un touret, ladite ligne pouvant par exemple être assemblée à des bouées immergées à 300 mètres de profondeur.

Le tuyau selon l'invention peut être utilisé également en combinaison avec d'autre bride de l'art antérieur pour réaliser des lignes flexibles, le tuyau présentant alors à une extrémité une bride associée à des renfoncements, et à son autre extrémité une bride de l'art antérieur telles que celles décrites dans les demandes de brevet précitées.

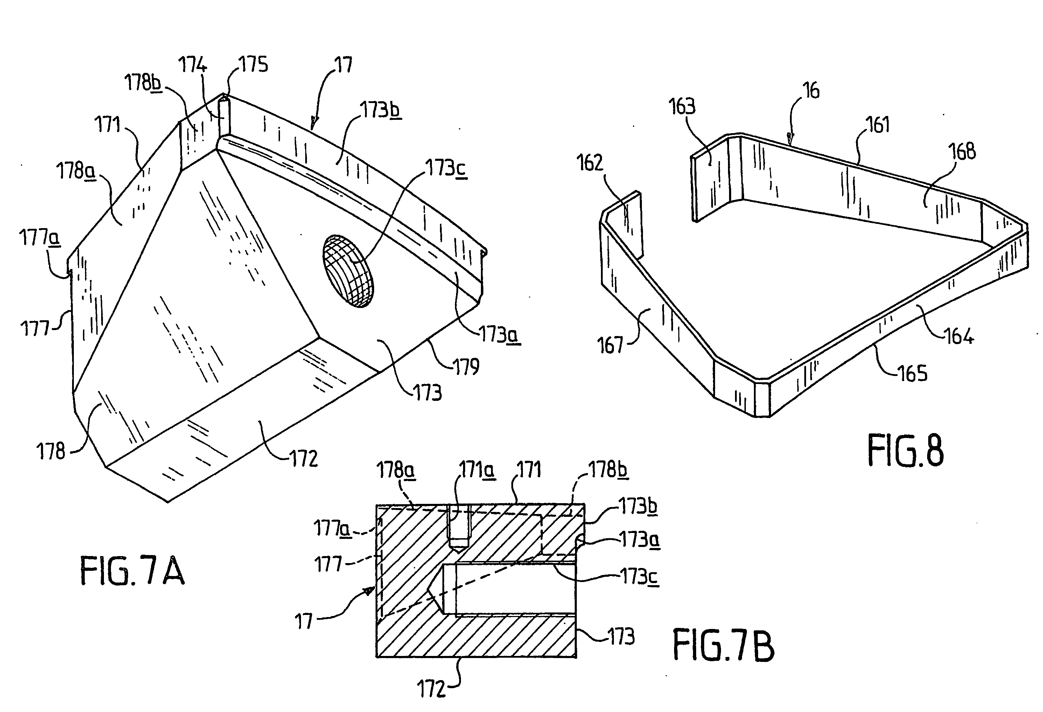

Le tuyau selon l'invention muni de renfoncements au voisinage de la bride pour former des perçages débouchant peut être obtenu par le procédé suivant. En référence aux figures 6A, 6B, 7A et 7B, avant la mise en place de la bride qui précède la cuisson ou vulcanisation du tuyau, des noyaux 17 de moulage sont assemblés contre la surface interne 322 de l'élément interne de la bride, par les perçages de la bride que l'on souhaite rendre débouchant une fois le tuyau réalisé. Dans l'exemple de réalisation, dix noyaux 17 sont assemblés pour obtenir un accès à un perçage sur deux. Il est à noter que sur les figures 6A et 6B, les perçages 34b qui apparaissent entre deux noyaux et qui ne seront pas débouchant, ne sont pas obturés. Il peut être prévu de fixer une bande d'étanchéité, préalablement à la mise en place des noyaux.

Chaque noyau 17 présente en coupe transversale une forme sensiblement trapézoïdale dont la grande base 171 est orientée radialement vers l'extérieur lorsque le noyau 17 est assemblé sur la bride. L'un des petits côtés perpendiculaires aux bases 171, 172 du noyau trapézoïdal forme la surface du noyau destinée à venir en contact avec la bride. Cette surface de contact 173 possède un perçage taraudé 173c dans lequel un boulon d'assemblage inséré par un perçage lisse 34a de la bride peut être vissé. Dans le cas d'une bride telle que décrite précédemment, les deux éléments 31, 32 de la bride sont pré-assemblés au moyen des tubulures 33, en maintenant un espace entre les éléments pour permettre ultérieurement le positionnement des nappes, et les noyaux sont ensuite assemblés contre la surface interne de l'élément interne. Les boulons d'assemblage des noyaux peuvent alors également assurer le serrage des éléments annulaires de la bride dans le sens axial pendant la vulcanisation. Il est à noter que les figures 6A et 6B illustrent uniquement le positionnement des noyaux par rapport à l'élément interne de la bride, les noyaux n'étant pas fixés sur ledit élément.

La surface de contact 173 présente par ailleurs un épaulement 173a dont la forme est adaptée au rayon de courbure de la bride et à la jonction arrondie entre la paroi circulaire externe 325 et la surface interne 322 de l'élément interne. Cet épaulement 173a permet un positionnement précis des noyaux sur la bride. Cet épaulement définit un bord supérieur 173b qui relie ladite surface de contact 173 à la surface supérieure 171. Lorsque le noyau est assemblé sur la bride, ce bord supérieur 173b est saillant par rapport à la paroi circulaire externe 325 de l'élément interne. La surface supérieure 171 du noyau présente de préférence une forme convexe dont le rayon de courbure correspond sensiblement à celui de la surface extérieure 9 du tuyau. Cette surface supérieure vient sensiblement affleurer la surface extérieure du tuyau lorsque la bride est installée sur le tuyau. De préférence, la petite base 172 du noyau n'est pas saillante par rapport à la surface circulaire interne 326. Afin de former un renfoncement 12 dont le volume corresponde sensiblement au volume nécessaire pour permettre la fixation du tuyau, et ainsi maintenir une quantité maximale de caoutchouc au niveau de la bride, le noyau présente une forme globalement conique dans le sens longitudinal, la surface arrière 177, opposée à la surface de contact 173, étant de plus petite taille que cette dernière. Par ailleurs, les surfaces obliques 178, 179 du noyau trapézoïdal sont reliées à la surface supérieure 171 par des surfaces planes 178a, 178b sensiblement perpendiculaires à la petite base 172. Tel qu'illustré uniquement sur les figures 7A et 7B, la petite base peut présenter une forme extérieure concave, formant éventuellement une surface continue avec les parois obliques précitées.

Avantageusement, le positionnement des bandes d'étanchéité 16 est réalisé par l'intermédiaire des noyaux 17. Les bandes d'étanchéité, présentent un pourtour correspondant aux parties planes 178a, 178b précitées, au bord supérieur 173b et à la surface arrière 177 des noyaux, et sont assemblées sur les noyaux contre ces portions. En référence à la figure 8, la bande d'étanchéité 16 a de préférence la forme générale d'un U, dont la base 164 et les bras sont destinés à venir respectivement contre le bord supérieur 173b, et les_parties planes_178a, 178b. Les extrémités libres 162, 163 des bras sont recourbées l'une vers l'autre et sont destinées à venir contre la surface arrière 177 du noyau. Cette configuration confère une élasticité à la bande d'étanchéité qui facilite son installation sur le noyau, mais présente l'inconvénient de ne pas recouvrir une partie de la paroi du renfoncement. Les nappes métalliques pourront être ajustées de manière à ne pas venir entre les deux extrémités libres de l'étrier, les nappes seront séparées à ce niveau de la paroi du renfoncement par une épaisseur de caoutchouc. Pour assurer le positionnement vertical de la bande 16, les parties planes sont reliées au bord supérieur 173b de la surface de contact par des chanfreins 174, lesdits chanfreins ne s'étendant pas jusqu'à la surface supérieure 171 pour former des butées 175 contre lesquelles la bande vient en appui par son bord supérieur 161. Par ailleurs, la surface arrière présente un épaulement 177a servant de butée à la bande. Lorsque le noyau est assemblé sur la bride, la bande d'étanchéité est en contact avec la surface circulaire externe 325 de l'élément interne par le bord inférieur 165 de sa base 164 qui présente un rayon de courbure correspondant à celui de la bride. Dans ce mode de réalisation, le bord supérieur 161 de la bande sera disposé à une distance de la surface externe 9 au moins égale à la hauteur des butées précitées. Dans le mode de réalisation illustré à la figure 8, les bras 168, 167 qui relient la base 164 aux extrémités libres 162, 163 présentent une hauteur qui décroît des extrémités libres à la base. Bien entendu, il peut être prévu une bande de hauteur constante, en prévoyant des encoches 169 sur le bord inférieur 165 au niveau de la jonction des bras à la base, tel qu'illustré sur la figure 2.

Après ajustement et positionnement des nappes de renforcement par rapport aux deux éléments de la bride, aux tubulures et aux noyaux, ainsi que les unes par rapport aux autres, l'ensemble est solidarisé par vulcanisation de manière classique. Afin d'éviter des découpes supplémentaires, du caoutchouc brut sous forme de film par exemple peut être préalablement disposé entre les noyaux 17 avant la mise en place de la bride sur la paroi du tuyau. Les boulons d'assemblage des noyaux sont ensuite dévissés et les noyaux sont retirés, en laissant dans les renfoncements ainsi formés les bandes d'étanchéité qui se sont collées aux parois des renfoncements lors de la vulcanisation. Pour faciliter l'extraction des noyaux, il peut être prévu des perçages taraudés 171a sur les surfaces supérieures 171 des noyaux. Les noyaux peuvent ainsi être extraits en tirant sur un outil vissé dans lesdits perçages. Par ailleurs, les noyaux peuvent être préalablement recouverts d'un anti-adhésif pour empêcher leur fixation au caoutchouc lors de la vulcanisation.

Bien que l'invention ait été décrite en liaison avec un mode de réalisation particulier, il est bien évident qu'elle n'y est nullement limitée et qu'elle comprend tous les équivalents techniques des moyens décrits, ainsi que leurs combinaisons si celles-ci entrent dans le cadre de l'invention. A titre d'exemple, la répartition des perçages débouchant et non débouchant peut varier. Par ailleurs, il peut être envisagé de prévoir uniquement des perçages débouchant, accessibles par des renfoncements distincts ou par un unique renfoncement annulaire.

## Revendications

1. Tuyau flexible (1) dont la paroi (1a) en élastomère est renforcée par au moins une carcasse principale (2) comportant des câbles souples, comprenant au moins à l'une de ses extrémités une bride (3) de raccordement annulaire, munie de perçages longitudinaux à partir de sa surface d'extrémité transversalement externe, à laquelle bride est fixée au moins la carcasse principale, ladite bride ayant un diamètre extérieur inférieur ou égal au diamètre extérieur de la paroi du tuyau au voisinage de la bride, **caractérisé par le fait que** la bride comprend des perçages (34a), dits débouchant, qui débouchent sur un ou des renfoncement(s) (12) ménagé(s) sur la surface extérieure (9) de la paroi du tuyau et dont les dimensions permettent d'y loger au moins un moyen de liaison (15) accessible de l'extérieur pour le raccordement de tuyaux bout à bout sans pièce intermédiaire intercalée entre leurs brides respectives.

2. Tuyau selon la revendication 1, **caractérisé par le fait que** chaque perçage débouchant (34a) débouche sur un renfoncement distinct (12).

3. Tuyau selon la revendication 1 ou 2, **caractérisé par le fait que** la bride comprend des perçages dits non débouchant (34b) qui ne débouchent pas sur un renfoncement et qui sont taraudés sur au moins une partie pour le vissage d'une tige filetée (14) complémentaire du moyen de liaison (15) précité, les perçages débouchant (34a) étant non taraudés.

4. Tuyau selon la revendication 3, **caractérisé par le fait que** les perçages débouchant (34a) et les perçages non débouchant (34b) sont alternativement et périphériquement répartis sur la surface d'extrémité externe (310) de la bride.

5. Tuyau selon la revendication 4, **caractérisé par le fait que** les perçages non débouchant (34b) comportent un fond séparant lesdits perçages de la paroi du tuyau et constituent des perçages borgnes de la bride.

6. Tuyau selon l'une des revendications 1 à 5, **caractérisé par le fait qu'**au moins une partie des parois (121) des renfoncements (12) est recouverte d'une bande d'étanchéité (16) permettant d'éviter le contact d'une carcasse (2, 6) avec l'extérieur.

7. Tuyau selon l'une des revendications 1 à 6, **caractérisé par le fait que** la carcasse principale (2) de renfort est formée d'une ou plusieurs paires (21, 22) de nappes concentriques espacées radialement par des couches d'élastomère (3), chaque paire étant constituée de deux nappes d'élastomère et de câbles métalliques parallèles orientés obliquement en sens inverse dans l'une et l'autre nappe de façon à former des angles de 20° à 70° par rapport à l'axe (X) du tuyau.

8. Tuyau selon la revendication 7, **caractérisé par le fait qu'**il comprend une carcasse secondaire (6) de renfort de diamètre supérieur à la carcasse principale (2) et espacée radialement vers l'extérieur de celle-ci par une couche d'élastomère (7), ladite carcasse secondaire comprenant des nappes concentriques (61-67) d'élastomère et de câbles métalliques et/ou textiles, assemblées directement les unes aux autres et/ou espacées par des couches d'élastomère (10), les câbles de la carcasse principale formant des angles sensiblement égaux à l'angle d'équilibre, tandis que les câbles de la carcasse secondaire forment des angles compris entre 20 et 70°.

9. Tuyau selon la revendication 8, **caractérisé par le fait que** la bride (2) comprend au moins deux éléments annulaires axialement solidaires, un élément longitudinalement externe (31) et un élément longitudinalement interne (32), muni chacun de trous coaxiaux formant au moins une partie des perçages (34a, 34b) précités, au moins l'élément interne possédant un diamètre interne inférieur ou égal à la carcasse principale (2) et au moins la carcasse principale étant coudée radialement, la partie radiale (21a, 22a) ainsi coudée étant intercalée et fixée entre les deux éléments de la bride.

10. Tuyau selon la revendication 9, **caractérisé par le fait qu'**il présente à proximité de la bride (2) une forme extérieure conique, avec augmentation de l'épaisseur en direction de la bride, obtenue par augmentation de l'épaisseur d'une couche élastomère et/ou insertion d'une couche élastomère et/ou de nappes entre des nappes d'une carcasse.

11. Tuyau selon la revendication 9 ou 10, **caractérisé par le fait que** la partie coudée radiale (21a, 22a) de la carcasse principale se prolonge radialement au-delà d'au moins l'élément longitudinalement interne (32) de la bride et est coudée longitudinalement à distance de l'extrémité du tuyau, au moins une partie des nappes la constituant s'intercalant entre des nappes de la carcasse secondaire pour fixer ces dernières à la bride via les nappes de la carcasse principale.

12. Tuyau selon l'une des revendications 9 à 11, **caractérisé par le fait qu'**il comprend à proximité de la bride (3) des nappes (19) de renfort longitudinal, comprenant des câbles disposés de manière sensiblement parallèle à l'axe (X) du tuyau, lesdites nappes étant assemblées à la bride et à la carcasse principale (2) et/ou à la carcasse secondaire (6).

13. Tuyau selon la revendication 12, **caractérisé par le fait que** les nappes de renfort ont des diamètres supérieurs à celui des nappes de la carcasse principale (2) et inférieurs à celui des nappes de la carcasse secondaire (6) et sont solidaires les unes des autres et assemblées à la carcasse principale, au moins l'une desdites nappes (19c) ayant son extrémité doublement coudée reliée à au moins une nappe (64, 65) de la carcasse secondaire.

14. Tuyau selon l'une des revendications 9 à 13, **caractérisé par le fait que** la bride comprend des éléments tubulaires (33) insérés au moins partiellement dans les trous coaxiaux des éléments longitudinalement interne et externe (31, 32) et dont les surfaces externes (330) sont recouvertes au moins partiellement d'élastomère, pour assurer l'étanchéité de la bride au niveau desdits perçages et garantir un assemblage résistant des différents éléments de la bride.

15. Tuyau selon l'une des revendications 9 à 14, **caractérisé par le fait qu'**il comprend des anneaux métalliques (11) ou une armature métallique en hélice noyée dans la couche d'élastomère (7) comprise entre la carcasse principale (2) et la carcasse secondaire (6).

16. Procédé d'obtention d'un tuyau flexible selon l'une des revendications précédentes, **caractérisé par le fait qu'**il comprend, pour former les renfoncements permettant l'obtention de perçages débauchants, une étape de fixation de noyaux (17) contre la surface transversalement interne (322) de la bride (3) au niveau d'au moins certains des perçages longitudinaux, une étape de positionnement et d'ajustement de la bride à l'extrémité du tuyau, lesdits noyaux étant saillants par rapport à la surface extérieure de la paroi en élastomère cru non vulcanisé du tuyau ou présentant une surface affleurant sensiblement celle-ci, et une étape d'enlèvement de ces noyaux après vulcanisation de l'élastomère.

17. Procédé selon la revendication 16, **caractérisé par le fait qu'**il comprend une étape de mise en place de la bande d'étanchéité (16) sur les noyaux (17), lesdites bandes restant collées à la paroi d'élastomère vulcanisé des renfoncements (12) après l'enlèvement des noyaux.

## Claims

1. Flexible hose (1), the elastomer wall (1 a) of which is reinforced by at least one main carcass (2) containing pliable cords and which comprises at one at least of its ends an annular connecting flange (3), provided, from its transversely external end surface, with longitudinal bores, to which flange at least the main carcass is fixed, said flange having an outer diametre less than or equal to the outer diametre of the wall of the hose proximate to the flange, which hose is **characterized in that** the flange comprises bores (34a), "emerging" bores, which emerge on one or more indentations (12) made on the outer surface (9) of the wall of the hose and the dimensions of which allow at least one externally accessible coupling means (15) to be housed there, for connecting hoses end to end without any intermediate component interposed between their respective flanges.

2. Hose according to Claim 1, **characterized in that** each emerging bore (34a) emerges on a separate indentation (12).

3. Hose according to Claim 1 or 2, **characterized in that** the flange comprises "non-emerging" bores (34b), which do not emerge on an indentation and which are tapped over at least a part thereof for the screwing of a complementary threaded rod (14) of the aforesaid coupling means (15), the emerging bores (34a) being untapped.

4. Hose according to Claim 3, **characterized in that** the emerging bores (34a) and the non-emerging bores (34b) are alternately and peripherally distributed over the external end surface (310) of the flange.

5. Hose according to Claim 4, **characterized in that** the non-emerging bores (34b) contain a bottom separating said bores from the wall of the hose and constitute dummy bores of the flange.

6. Hose according to one of Claims 1 to 5, **characterized in that** at least a part of the walls (121) of the indentations (12) is lined with a sealing strip (16) by which contact of a carcass (2, 6) with the exterior can be prevented.

7. Hose according to one of Claims 1 to 6, **characterized in that** the main reinforcement carcass (2) is formed by one or more pairs (21, 22) of concentric plies radially spaced by layers of elastomer (3), each pair being constituted by two elastomer plies and parallel metallic cords orientated obliquely in the opposite direction in the one and the other ply such as to form angles of 20° to 70° relative to the axis (X) of the hose.

8. Hose according to Claim 7, **characterized in that** it comprises a secondary reinforcement carcass (6) of greater diametre than the main carcass (2) and radially spaced toward the outside of the latter by a layer of elastomer (7), said secondary carcass comprising concentric plies (61-67) of elastomer and of metallic and/or textile cords, joined directly to one another and/or spaced by layers of elastomer (10), the cords of the main carcass forming angles substantially equal to the angle of equilibrium, while the cords of the secondary carcass form angles between 20° and 70°.

9. Hose according to Claim 8, **characterized in that** the flange (2) comprises at least two axially joined annular elements, a longitudinally external element (31) and a longitudinally internal element (32), each provided with coaxial holes forming at least a part of the aforesaid bores (34a, 34b), at least the internal element possessing an internal diametre less than or equal to the main carcass (2) and at least the main carcass being radially bent, the radial part (21 a, 22a) thus bent being interposed and fixed between the two elements of the flange.

10. Hose according to Claim 9, **characterized in that** it has, close to the flange (2), a conical exterior shape, with an increase in thickness in the direction of the flange, obtained by increasing the thickness of an elastomer layer and/or insertion of an elastomer layer and/or of plies between plies of a carcass.

11. Hose according to Claim 9 or 10, **characterized in that** the radial bent part (21 a, 22a) of the main carcass extends radially beyond at least the longitudinally internal element (32) of the flange and is bent longitudinally at a distance from the end of the hose, at least a part of the plies which constitute it being interposed between the plies of the secondary carcass so as to fix these latter to the flange via the plies of the main carcass.

12. Hose according to one of Claims 9 to 11, **characterized in that** it comprises, close to the flange (3), longitudinal-reinforcement plies (19), comprising cords arranged substantially parallel to the axis (X) of the hose, said plies being joined to the flange and to the main carcass (2) and/or to the secondary carcass (6).

13. Hose according to Claim 12, **characterized in that** the reinforcement plies have diametres greater than that of the plies of the main carcass (2) and less than that of the plies of the secondary carcass (6) and are joined together and joined to the main carcass, at least one of the plies (19c) having its double-bent end connected to at least one ply (64, 65) of the secondary carcass.

14. Hose according to one of Claims 9 to 13, **characterized in that** the flange comprises tubular elements (33) inserted at least partially in coaxial holes of the longitudinally internal and external elements (31, 32) and the external surfaces (330) of which are lined at least partially with elastomer to ensure the leak-tightness of the flange at the level of said bores and to guarantee that the various elements of the flange are strongly joined.

15. Hose according to one of Claims 9 to 14, **characterized in that** it comprises metallic rings (11) or a helical metallic armouring embedded in the layer of elastomer (7) contained between the main carcass (2) and the secondary carcass (6).

16. Process for obtaining a flexible hose according to one of the preceding claims, **characterized in that** it comprises, so as to form the indentations making it possible to obtain the emerging bores, a step for fixing cores (17) against the transversely internal surface (322) of the flange (3) at the level of at least certain of the longitudinal bores, a step for positioning and adjusting the flange at the end of the hose, said cores being prominent relative to the outer surface of the wall, made of crude non-vulcanized elastomer, of the hose, or having a surface lying substantially flush with said outer wall surface, and a step for removing these cores after the elastomer has been vulcanized.

17. Process according to Claim 16, **characterized in that** it comprises a step for fitting the sealing strip (16) onto the cores (17), said strips remaining stuck to the vulcanized elastomer wall of the indentations (12) after the cores are removed.

## Patentansprüche

1. Flexibler Schlauch (1) mit einer durch wenigstens einen, mit flexiblen Seilen versehenen Haupt-Mantel (2) verstärkten Wandung (1a) aus Elastomer und einem ringförmigen Anschlussflansch (3) an wenigstens einem seiner Enden mit von dessen quer verlaufender äußerer Endfläche in Längsrichtung ausgehenden Bohrungen, an welchem Flansch wenigstens der Haupt-Mantel befestigt ist, wobei dieser Flansch einen gegenüber dem Außendurchmesser der Wandung des Schlauchs im Bereich des Flansches kleineren oder gleichen Außendurchmesser hat, **dadurch gekennzeichnet, dass** der Flansch Durchgangsbohrungen genannte Bohrungen (34a) aufweist, die in eine oder mehrere in der Außenfläche (9) der Wandung des Schlauchs ausgesparte Vertiefungen (12) münden und deren Abmessungen es ermöglichen, darin wenigstens ein von außen zugängliches Verbindungsmittel (15) für die endseitige Verbindung von Schläuchen unterzubringen, ohne zwischen deren jeweilige Flanschen ein Verbindungsteil einsetzen zu müssen.

2. Schlauch nach Anspruch 1, **dadurch gekennzeichnet, dass** jede Durchgangsbohrung (34a) in eine andere Vertiefung (12) mündet.

3. Schlauch nach Anspruch 1 oder 2, **dadurch gekennzeichnet, dass** der Flansch Nicht-Durchgangsbohrungen genannte Bohrungen (34b) aufweist, die nicht in eine Vertiefung münden und die zumindest in einem Teilbereich mit einem Gewinde zum Einschrauben eines zu dem zuvor erwähnten Verbindungsmittel (15) komplementär ausgebildeten Gewindestift (14) versehen sind, während die Durchgangsbohrungen (34a) kein Gewinde aufweisen.

4. Schlauch nach Anspruch 3, **dadurch gekennzeichnet, dass** die Durchgangsbohrungen (34a) und die Nicht-Durchgangsbohrungen (34b) abwechselnd am Umfang auf der äußeren Randseite (310) des Flansches verteilt sind.

5. Schlauch nach Anspruch 4, **dadurch gekennzeichnet, dass** die Nicht-Durchgangsbohrungen (34b) einen Verschluss aufweisen, der diese Bohrungen von der Wandung des Schlauchs trennt, so dass sie Sackbohrungen des Flansches bilden.

6. Schlauch nach einem der Ansprüche 1 bis 5, **dadurch gekennzeichnet, dass** wenigstens ein Teil der Wandungen (121) der Vertiefungen (12) von einem Dichtungsband (16) bedeckt ist, wodurch der Kontakt eines Mantels (2, 6) mit der Umgebung verhindert werden kann.

7. Schlauch nach einem der Ansprüche 1 bis 6, **dadurch gekennzeichnet, dass** der Haupt-Verstärkungsmantel (2) aus einem oder mehreren Paaren (21, 22) konzentrischer Lagen gebildet ist, die in radialer Richtung durch Schichten (3) aus Elastomer voneinander getrennt sind, wobei jedes Paar aus zwei Lagen Elastomer und parallelen metallenen Seilen gebildet ist, die schräg gerichtet in entgegengesetzter Richtung in der einen und der anderen Lage verlaufen, um auf diese Weise Winkel von 20° bis 70° in Bezug auf die Achse (X) des Schlauchs zu bilden.

8. Schlauch nach Anspruch 7, **dadurch gekennzeichnet, dass** er einen Neben-Verstärkungsmantel (6) mit einem größeren Durchmesser als der Haupt-Mantel (2) aufweist und von dessen Außenseite durch eine Schicht (7) aus Elastomer radial beabstandet ist, wobei der Neben-Mantel konzentrische Lagen (61-67) aus Elastomer und metallenen und/oder textilen Seile aufweist, die direkt aneinander gefügt und/oder durch Schichten (10) aus Elastomer voneinander getrennt sind, wobei die Seile des Haupt-Mantels Winkel bilden, die annähernd gleich dem Ausgleichswinkel sind, während die Seile des Neben-Mantels Winkel zwischen 20° und 70° bilden.

9. Schlauch nach Anspruch 8, **dadurch gekennzeichnet, dass** der Flansch (3) wenigstens zwei ringförmige, in Achsrichtung fest miteinander verbundene Elemente aufweist, nämlich in Längsrichtung ein äußeres (31) und in Längsrichtung ein inneres Element (32), die jeweils koaxial angeordnete Löcher aufweisen, die wenigstens einen Teil der zuvor erwähnten Bohrungen (34a, 34b) bilden, wobei wenigstens das innere Element einen kleineren oder gleich großen Innendurchmesser wie der Haupt-Mantel (2) aufweist und wenigstens der Haupt-Mantel in radialer Richtung gebogen ist, wobei der so radial gebogene Teil (21a, 22a) zwischen die beiden Elemente des Flansches geschoben und befestigt ist.

10. Schlauch nach Anspruch 9, **dadurch gekennzeichnet, dass** er in der Nähe des Flansches (3) eine konische Außenform aufweist, wobei die Dicke zum Flansch (3) hin zunimmt, was durch Zunahme der Dicke einer Elastomer-Schicht und/oder durch Einfügen einer Elastomer-Schicht und/oder von Lagen zwischen den Lagen eines Mantels erreicht wird.

11. Schlauch nach Anspruch 9 oder 10, **dadurch gekennzeichnet, dass** der radial gebogene Teil (21a, 22a) des Haupt-Mantels in radialer Richtung wenigstens bis über das in Längsrichtung innere Element (32) des Flansches hinaus verlängert und im Abstand vom Ende des Schlauchs in die Längsrichtung gebogen ist, wobei wenigstens ein Teil der Lagen zwischen die Lagen des Neben-Mantels eingeschoben ist, um diese letzteren mittels der Lagen des Haupt-Mantels am Flansch zu befestigen.

12. Schlauch nach einem der Ansprüche 9 bis 11, **dadurch gekennzeichnet, dass** er in der Nähe des Flansches (3) längsgerichtete Verstärkungslagen (19) aufweist, die im wesentlichen parallel zur Achse (X) des Schlauchs angeordnete Seile enthalten, wobei diese Lagen mit dem Flansch und mit dem Haupt-Mantel (2) und/oder dem Nebel-Mantel (6) verbunden sind.

13. Schlauch nach Anspruch 12, **dadurch gekennzeichnet, dass** die Verstärkungslagen größere Durchmesser als die Lagen des Haupt-Mantels (2) und kleinere Durchmesser als die des Neben-Mantels (6) haben und sowohl fest untereinander als auch mit dem Haupt-Mantel verbunden sind, wobei wenigstens einer dieser Lagen (19c) ein doppelt gebogenes Ende hat, das wenigstens mit einer Lage (64, 65) des Neben-Mantels verbunden ist.

14. Schlauch nach einem der Ansprüche 9 bis 13, **dadurch gekennzeichnet, dass** der Flansch rohrförmige Elemente (33) aufweist, die wenigstens zum Teil in die koaxialen Löcher der in Längsrichtung inneren und äußeren Elemente (31, 32) eingesetzt sind und deren Außenflächen (330) wenigstens zum Teil mit Elastomer bedeckt sind, um die Dichtigkeit des Flansches im Bereich dieser Bohrungen zu gewährleisten und um eine feste Verbindung der verschiedenen Elemente des Flansches zu garantieren.

15. Schlauch nach einem der Ansprüche 9 bis 14, **dadurch gekennzeichnet, dass** er metallene Ringe (11) oder eine metallene Bewehrung in Form einer Wendel aufweist, die in die zwischen dem Haupt-Mantel (2) und dem Neben-Mantel (6) vorgesehenen Lage (7) aus Elastomer eingebettet ist.

16. Verfahren zur Herstellung eines flexiblen Schlauchs nach einem der vorhergehenden Ansprüche, **dadurch gekennzeichnet, dass** es, um die Vertiefungen auszubilden, um die Durchgangsbohrungen zu erhalten, die folgenden Schritte umfasst: einen Schritt zur Befestigung von Formkernen (17) an der inneren Querfläche (322) des Flansches (3) im Bereich von wenigstens bestimmten längsgerichteten Bohrungen, einen Schritt zum Positionieren und Justieren des Flansches am Ende des Schlauchs, wobei die Formkerne in Bezug auf die aus rohem, nicht vulkanisierten Elastomer bestehende Außenfläche der Wandung des Schlauchs überstehen oder eine annähernd damit ebene Fläche bilden, und einen Schritt zum Entfernen dieser Formkerne nach der Vulkanisation des Elastomers.

17. Verfahren nach Anspruch 16, **dadurch gekennzeichnet, dass** es einen Schritt für die Anbringung des Dichtungsbandes (16) auf den Formkernen (17) umfasst, wobei diese Bänder nach dem Entfernen der Formkerne mit der vulkanisierten Elastomer-Wandung der Vertiefungen (12) verklebt bleiben.
